# EUROPEAN PATENT APPLICATION

(11) **EP 1 785 322 A1**
(43) Date of publication of application: **16.05.2007**
(21) Application number: 06010575.6
(22) Date of filing: 23.05.2006
(51) Int. Cl.: B60R 25/02

(54) **Foldable antitheft device capable of locking the steering-wheel of a vehicle**

(30) Priority: 11.11.2005 IT MI20052163
(71) Applicant: TAVOLA S.p.A., 20141 Milano (IT)
(72) Inventor: Chiaro, Luigi, 80125 Napoli (IT)
(74) Representative: La Ciura, Salvatore

(57) **Abstract**

It is hereby described an antitheft device capable of locking the steering-wheel of a vehicle, of the kind consisting of an extended tubular element to be fitted to the steering-wheel, said element having such a length as to protrude with respect to the steering-wheel to such an extent as to prevent it from being turned, in which the said extended element consists of two tubular elements (2, 3), and a rigid element (9) is provided, which can slide along its axis inside one of the said tubular elements, where the said element (9) can be moved from a position in which it is completely fitted inside the respective tubular element (2) just near the hinge ends, to a position in which it partially protrudes from the said tubular element to fit into the adjacent tubular element (3) when the two tubular elements are aligned, since means (11) capable of locking the said sliding element in the reached position are provided.

## Description

This invention proposes an antitheft device made in such a way as to lock a steering-wheel of a vehicle in order to prevent it from being used, of the kind consisting of a tubular element to be fitted to the steering-wheel, which element having such a length as to protrude with respect to the steering-wheel, wherein the said tubular element consists of two parts, hinged together in such a way as to shift it from a minimum-size folded embodiment to a working position in which the two parts are aligned and solidly connected.

Each of the said two parts is provided with means capable of engaging the rim of the steering-wheel of a vehicle, and a body is sliding-fitted into one of the two elements of the tubular element, which body can partially protrude from the said element to fit into the second element and solidly engage the two parts, means being provided, capable of locking such sliding element in the locking position of the two tubular bodies.

The antitheft device according to the invention is, accordingly, characterised by its particular embodiment which particularly improves its user-friendliness features, since it enables to halve the overall dimensions, when it is not in use, and to store and handle it much more easily.

Several types of mechanical antitheft devices are known, widely popular in the last years, often in addition to other electronic antitheft devices already fitted in cars, since the presence of an easily visible mechanical element, besides improving safety, can likewise discourage potential thieves.

The mechanical antitheft devices are mainly divided into two wide categories: those acting on the gear controls or on the pedals, and those which are applied on the steering-wheel.

In both cases the purpose of the antitheft device is locking in position the control which it is applied to, in order to prevent the use thereof and, accordingly, to prevent the vehicle from being stolen.

This invention concerns an antitheft device of the second kind, i.e. the kind to be applied to a steering-wheel of a vehicle.

The known antitheft devices falling into this category consist of an arm or a rigid tubular element made of a sturdy material, provided with means which enable it to be solidly fitted to a steering-wheel of a vehicle and which, once it has been put in position, protrudes from the steering-wheel to such an extent as to prevent the steering-wheel from being used, since the rotation of the steering-wheel would result in the antitheft device bumping into the bodywork or other fixed parts of the vehicle, thus locking any steering-wheel movement.

The said known devices are sometimes composed of a full arm, provided with connections to fit it to the steering-wheel rim, or otherwise, more often, of a tubular element having an openable portion of the wall, and provided with openings which enable the device to be fitted on the steering-wheel and to be then locked in such position.

The antitheft devices of this kind are all equally effective, but appear to be, unfortunately, impractical since they are rigid objects, with a length of approx. 70-80 cm. and which, consequently, can be hardly lodged, especially in the narrow space of a passenger compartment.

These disadvantages can be overcome by this invention, which proposes an antitheft device to be fitted to a steering-wheel of a vehicle, consisting of two parts hinged together and provided of locking means capable of solidly connecting the said two parts, in such a way that the device can have a minimum-sized embodiment, in which it is folded and has, accordingly, a halved length, and a working position in which it is entirely unfolded, thus reaching the length of the known devices.

This invention will be now described in detail, by way of example and without any limitation thereto, with reference to the figures annexed hereto, wherein:
- figure 1 is perspective view of a antitheft device according to the invention;

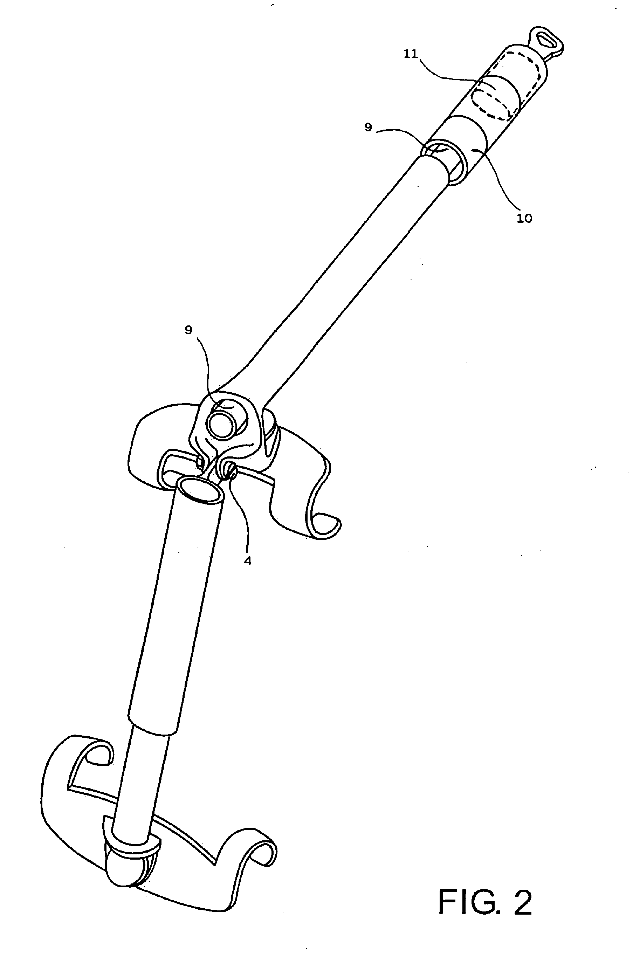

- figure 2 is the view of the antitheft device according to the invention shown in a position which is between the closing folded position and the working position;

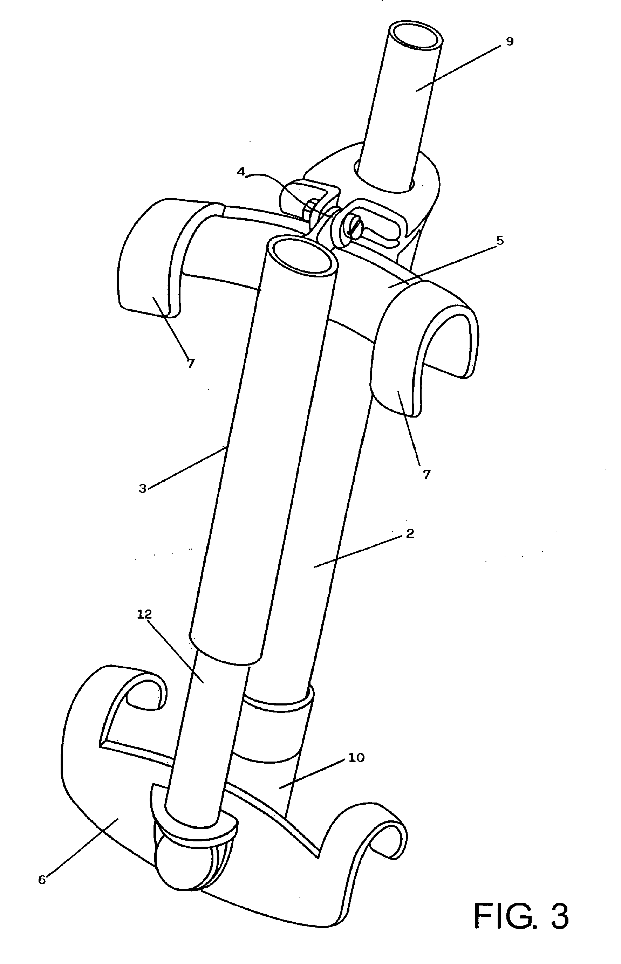

- figure 3 is the view of the antitheft device according to the invention, when it is folded.

With reference to the figures annexed hereto, the antitheft device according to the invention, indicated as a whole as 1, comprises a tubular bar consisting of two parts 2 and 3 hinged together in one point 4 and which have, each of them, engagement means 5 and 6 made in such a way as to engage the steering-wheel rim of a vehicle.

The engagement means 5 and 6 consist of a kind of jaws which have a couple of folded arms 7, among which there remains a hollow space 8.

The jaws 5 and 6 are intended for being fitted into the rim of a steering-wheel, from the inside, with at least one spoke inserted in the space 8 between the two arms 7.

At least one of the two jaws, in the case shown the jaw 5, is fitted on the respective tubular element with the possibility to make limited rotations, in such a way as to better adjust the device to different types of steering-wheels.

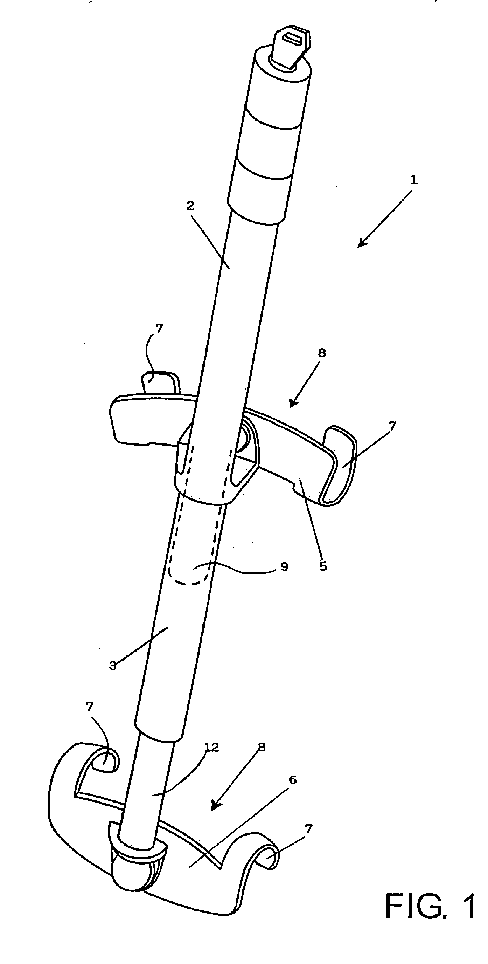

Inside the tubular element 2, a sliding element 9 is fitted into, consisting, in turn, of a tubular element, or a cylindrical bar or the like, which can slide along its axis between a position in which, just near the tubular element 2 end hinged to the tubular element 3, it completely retracts inside the said tubular element, and a working position, shown by figure 1, in which it sticks out of the tubular element 2 and then fit into the tubular element 3 when the said two elements are perfectly aligned, in order to lock them in this aligned embodiment and to obtain a perfectly rigid element.

From the opposite side with respect to the one of reciprocal engagement of the two tubular elements, the sliding element 9 is equipped with a handle 10 inside of which a block 11 with its key is fitted, and by acting on which it is possible to lock the cylindrical bar 8 in the reached position.

In a preferred embodiment of the invention, also the tubular element 3 consists of two sliding parts, one inside the other, and lockable in the position that has reached, in order to enable the device to be adapted to steering-wheels having different measurements.

For example, the jaw 6 may be fitted to the end of a bar or tubular element 12 sliding inside the tubular element 3 and is locked in the most proper position, for example by a bolt having a loosened part in such a way that, while keeping on tightening, the said bolt is shorn off, in order to finally lock the parts 3 and 12in the desired position.

The functioning is as follows.

While the device is still in the folded embodiment or semi-folded embodiment, fit the jaw 6 on the steering-wheel rim of a vehicle, possibly in such a way that a spoke remains included in the space 8 between the two folded arms 7.

At this point, rotate the tubular element 2 around the hinge point 4 until it is aligned to the tubular element 3.

While making this movement, the jaw 5 rotates and fits on the steering-wheel rim, on the opposite part of the jaw 6.

If the length of the tubular element 3 had been previously adjusted, the antitheft device is perfectly fitted on the steering-wheel. Otherwise, it would only be necessary to pull out the bar 12 from the tubular element 3 until the device reaches the desired length and then tighten the bolt 12, while keeping on tightening until the bolt shears off and the device is so locked in the embodiment having the proper length for the steering-wheel which it must be fitted to.

When the tubular elements 2 and 3 are perfectly aligned, push the bar 9 until it partially protrudes from the tubular element 2 and fits into the tubular element 3, with the two tubular elements solidly engaged one to the other.

By means of the key, the bar 9 locks in the position that has reached, with the antitheft device solidly fitted on the steering-wheel of the vehicle, thus preventing it form being turned.

It has to be also noted that the antitheft device according to the invention protects against the theft of the airbag system, since when it is fitted, the tubular bar is diametrically placed on the steering-wheel, thus preventing any attempt of access to and removal of the airbag system.

The scope of the same invention provides for any possible changes.

For example, the bar 12 and the tubular element 3 can be threaded in order to enable the length of the element to be adjusted.

## Claims

1. Antitheft device capable of locking a steering-wheel of a vehicle in order to prevent it from being used, of the kind consisting of an extended tubular element to be fitted to the steering-wheel, said element having such a length as to protrude with respect to the steering-wheel to such an extent as to prevent it from being turned, **characterised in that** the said extended element consists of two parts (33), hinged together in such a way as to shift the device from a minimum-sized folded embodiment to a working position in which the two parts are aligned and solidly connected.

2. Antitheft device according to the claim 1, **characterised in that** the said extended element consists of two tubular elements (2, 3), is a rigid element (9) being provided, which slides along its axis inside one of the said tubular elements, where the said element (9) can be moved from a position in which it is completely retracted inside the respective tubular element (2) just near the hinge ends, to a position in which it partially protrudes from the said tubular element to fit into the adjacent tubular element (3) when the said tubular elements are aligned, means (11) being provided, capable of locking the said sliding element in the reached position.

3. Antitheft device according to the claim 2, **characterised in that** it is provided, in order to lock the said sliding element in the reached position, with a block (11) with a key solidly connected to the said element.

4. Antitheft device according to the claims 1, 2, **characterised in that** each of the said tubular elements is provided with means (5, 6) capable of engaging the steering-wheel of a vehicle in opposite positions.

5. Antitheft device according to the claim 4, in which the said engaging elements of the steering-wheel consist of jaws (5, 6) with folded arms (7) which are fitted on the steering-wheel from the inside, while the rotation of one of the said two tubular elements moves the said jaws in the engagement position with the steering-wheel.

6. Antitheft device according to the claim 5, **characterised in that** at least one of the said jaws (5, 6) is fitted on the respective tubular element with possibility of limited rotations, in order to adjust it to the steering-wheel shape.

7. Antitheft device according to any of the previous claims, **characterised in that** at least one of the said tubular elements has an adjustable length, means being provided, capable of locking it when the position has been reached.
